# EUROPEAN PATENT SPECIFICATION

(11) **EP 4 249 443 B1**
(45) Date of publication and mention of the grant of the patent: **28.01.2026**
(21) Application number: 21895004.6
(22) Date of filing: 11.11.2021
(51) Int. Cl.: C03B 33/09, C03B 33/037, B23K 26/38, B23K 26/062, B23K 37/00, B28D 1/22, B23K 26/073, B23K 26/402, C03B 33/02, C03B 33/04, B23K 103/00

(54) **METHOD AND APPARATUS FOR CUTTING CERAMIC**
VERFAHREN UND VORRICHTUNG ZUM SCHNEIDEN VON KERAMIK
PROCÉDÉ ET APPAREIL DE COUPE DE CÉRAMIQUE

(30) Priority: 17.11.2020 KR 20200153921
(43) Date of publication of application: 27.09.2023
(73) Proprietor: Iti Co., Ltd., Gyeonggi-do 14118 (KR)
(72) Inventor: LEE, Seak Joon, Uiwang-si, Gyeonggi-do 16042 (KR)
(74) Representative: Müller Verweyen
(86) International application number: PCT/KR2021/016399
(87) International publication number: WO 2022/108234

(56) References cited:
- CN-A- 109 791 252
- JP-A- 2018 506 489
- KR-A- 20150 111 821
- KR-A- 20160 059 837
- KR-A- 20170 043 587
- KR-A- 20190 083 459
- KR-A- 20190 083 459
- KR-B1- 102 241 518
- US-B2- 10 877 220

## Description

### [Technical Field]

The present invention relates to a method and an apparatus for cutting a ceramic, and more specifically, to a method and an apparatus for cutting a ceramic, which cut an ultra-thin glass, chemically tempered or thermally tempered glass.

### [Background Art]

A ceramic refers to a solid material obtained by combining metal, non-metal, and metalloid with each other by a heat treatment to form crystalline structures through a sintering process, and then gathering the formed crystalline structures to form a three-dimensional network structure.

Recently, new ceramic materials formed using high-purity synthetic raw materials such as silicon carbide, silicon nitride, alumina, zirconia, and barium titanate have been spotlighted unlike conventional ceramic materials mainly formed using natural raw materials such as clay, kaolin, feldspar, and silica, and have been used in a wide range of fields such as electricity, magnetism, machinery, chemistry, optics, and biotechnology.

In general, a ceramic material (hereinafter referred to as "ceramic') is cut by forming cracks using a high-hardness wheel made of diamond, which has a hardness higher than that of the ceramic, and breaking or grinding using a high-hardness abrasive stone.

In recent years, the ceramic is heated using a laser or a high-power beam, melted and vaporized to form a predetermined groove, and then cut by breaking the material or cut by completely removing the material.

Meanwhile, recently, a tempered glass, which is used as a cover glass for electronic devices such as mobile phones or tablet PCs, is chemically tempered so as to be resistant to scratches or damage, and the usage thereof is being expanded.

In addition, an ultra-thin glass (hereinafter referred to as 'UTG') applied to a foldable display has been recently developed. In order to overcome the disadvantages of existing glass, the UTG is used as a foldable cover window that additionally undergoes a tempering process for enhancing flexibility and durability of a glass processed to be about 40 µm thin.

However, in the laser cutting method according to the related art, when the ceramic is melted or vaporized, cracks and thermal shocks are generated in the material, and thus when a thin glass such as the UTG, the chemically tempered glass, or the thermally tempered glass is cut, the material is easily damaged due to the cracks and the thermal shocks, resulting in difficulty for applying the laser cutting method to mass-production.

For this reason, in the related art, the tempered glass is used by cutting the tempered glass into an applicable size of a product before the tempered glass is tempered, and then the cut glass is tempered one by one.
(Patent Document 1) Korean Patent Registration No. 10-1119289 (published on March 15, 2012)
(Patent Document 2) Japanese Unexamined Patent Publication No. 2013-112532 (published on June 10, 2013)
KR 2019 0083459 A and CN 109 791 252 A disclose further apparatuses for cutting a ceramic.

### [Disclosure]

### [Technical Problem]

In order to solve the above problems, an object of the present invention is to provide a method and an apparatus for cutting a ceramic, which may cut a ceramic having a surface that is tempered at a depth of level of 1 µm or greater or a thin-sheet ceramic having a thickness of 3 µm or less without cracks or damage.

Another object of the present invention is to provide a method and an apparatus for cutting a ceramic to secure straightness by compensating for an error generated according to a cutting position when the ceramic is cut.

### [Technical Solution]

In order to achieve the above object, the present invention provides an apparatus for cutting a ceramic as defined in claim 1.

In addition, in order to achieve the above object, the present invention provides a method for cutting a ceramic as defined in claim 6.

### [Advantageous Effects]

As described above, according to the method and the apparatus for cutting a ceramic according to the present invention, it is possible to cut a ceramic, that is, a ceramic having a surface that is tempered at a depth of level of 1 µm or greater or a thin-sheet ceramic having a thickness of 3 µm or less without cracks or damage.

That is, according to the present invention, the ceramic is locally heated to equal to or lower than a melting point of the ceramic with a beam, which has a beam mode and a beam shape set based on a thickness of the ceramic material and a tempered depth of the ceramic, by adjusting the cutting speed in proportion to the output of the beam, regions affected by heat and thermal stress are adjusted to prevent the ceramic from being cut in an arbitrary direction, and thermal stress equal to or greater than a maximum heat resistance strength of the ceramic is generated so that it is possible to cut the ceramic along a desired path.

In addition, according to the present invention, it is possible to reduce thermal deformation of the surface of the ceramic by additionally spraying a coolant on the surface of the ceramic to which the beam is emitted when the thin-sheet ceramic is cut, and to precisely cut the thin-sheet ceramic along a desired path.

In addition, according to the present invention, a cutting position where cutting is currently performed by the emitted beam is measured when the ceramic is cut, and distortion of the cutting position is compensated in real time by calculating a difference between the measured cutting position and the cutting line, so that it is possible to improve straightness of the cutting line and cutting performance.

### [Description of Drawings]

FIG. 1 is a configuration view of an apparatus for cutting a ceramic according to a preferred embodiment of the present invention.
FIG. 2 is a view for illustrating a process of cutting a UTG.
FIG. 3 is a view for explaining a process of compensating for distortion of a cutting position.
FIG. 4 is a flowchart for explaining a method for cutting a ceramic in steps according to a preferred embodiment of the present invention.
FIG. 5 and 6 are views for illustrating a tempered glass and a UTG, which have tempered surfaces that are damaged in a cutting process, respectively.
FIG. 7 to 9 are views for illustrating a ceramic cut by the method for cutting a ceramic according to Examples 1 to 3, respectively.

### [Mode for Invention]

Hereinafter, a method and an apparatus for cutting a ceramic according to a preferred embodiment of the present invention will be described in detail with reference to the accompanying drawings.

According to the present invention, a beam having a predetermined beam width is emitted to a ceramic to be cut, and thermal stress is generated in a material to be equal to or greater than the maximum heat resistance strength of the material while heating the ceramic to equal to or lower than a melting point of the ceramic, so that the ceramic is cut along a desired path without cracks or damage.

To this end, according to the present invention, the ceramic is heated by adjusting an output, a shape, a mode, and a cutting speed of the beam emitted to the ceramic.

That is, according to the present invention, a ceramic having a surface that is tempered at a depth of level of 1 µm or greater or a thin-sheet ceramic having a thickness of 3 mm or less is cut without cracks or damage.

For example, in order to apply the ceramic to a cover glass of an electronic device, a surface of a thermally or chemically tempered glass has a stress. Therefore, the tempered glass is cut in an arbitrary direction due to slight mechanical damage or a thermal shock such as a laser, so that it is difficult to cut the tempered glass in a desired direction.

In addition, since a thin glass having a thickness of 3 mm or less has a weak shock strength due to the thin thickness, the thin-sheet glass is cut in an arbitrary direction even with slight mechanical damage or a thermal shock such as a laser, so that it is difficult to cut the thin glass in a desired direction.

That is, the tempered glass is directly damaged even when a small groove is formed by a mechanical wheel, and is also directly damaged even when the tempered glass is slightly heated or melted by a laser.

In addition, the thin-sheet glass is damaged and broken in an arbitrary direction even when a small groove is formed by a mechanical wheel, and is also damaged in an arbitrary direction even when only the thin-sheet glass is heated or melted by a laser.

Meanwhile, when a suitable region of a minute damage part formed on an outer periphery of the ceramic is heated by a laser to generate a suitable thermal stress, the cutting may be induced along a desired path from a minute damage part, that is, a cutting start part.

That is, when laser heating is performed, if an internal thermal stress of the ceramic is weak because a heating temperature for heating the ceramic is low, the ceramic may not be prevented from being damaged in an arbitrary direction. Therefore, when the heating temperature is low, the ceramic may not be cut, and when the heating temperature is too high, the ceramic may be melted or damaged in an arbitrary direction by a thermal shock.

Therefore, when the internal thermal stress of the ceramic is appropriately adjusted, cutting may be prevented from being performed in an arbitrary direction, but a cutting line may be induced from the cutting start part to a region where the laser generates thermal stress. That is, the stress may be generated such that the ceramic may be cut along a cutting path.

As described above, when the ceramic is cut, if any one of the output, the mode, the shape, the emission area, and the cutting speed of the beam is not optimized, the ceramic is melted so that the ceramic suffers thermal damage or does not react at all.

Therefore, when the cutting speed is adjusted in proportion to the output of the beam, the ceramic is locally heated to the melting point or lower with a beam having a beam mode and a beam shape that are optimized for a material and a thickness of the ceramic, and in this case, the thermal stress is generated to be equal to or higher than the maximum heat resistance strength of the ceramic, so that it possible to cut the ceramic along a desired path without damaging the material.

That is, according to the present invention, the ceramic may be heated by adjustment in optimization of the output, the shape, the mode, the emission area, and the cutting speed of the beam emitted to the ceramic, and the ceramic may be cut without performing a cooling process of the heated ceramic or melting and vaporizing of the ceramic.

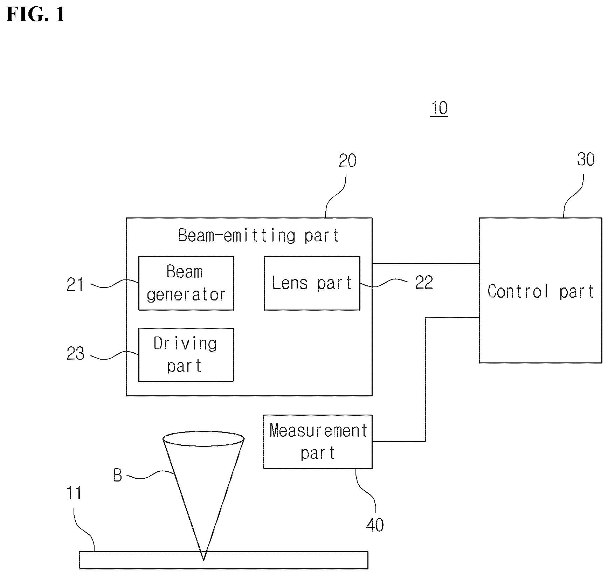

FIG. 1 is a configuration view of an apparatus for cutting a ceramic according to a preferred embodiment of the present invention.

Hereinafter, terms indicating directions such as "left", "right", "front", "rear", "upward", and "downward" are defined to indicate respective directions based on a state illustrated in each drawings.

In addition, it should be noted that an apparatus and a method for cutting a ceramic, which cut a UTG, have been described in the present embodiment, but the present invention is not limited thereto, and may be applied to an apparatus and a method for cutting a very thin glass having a thickness of 100 µm or less such as a UTG, a chemically tempered glass, or a thermally tempered glass.

As illustrated in FIG. 1, a ceramic cutting apparatus 10 according to a preferred embodiment of the present invention includes a beam-emitting part 20 that emits a beam B of a wavelength that is absorbed by the UTG in order to cut a ceramic 11 to be cut, for example, the UTG without cracks or damage, a damage generation part 30 that generates minute initial damage at a cutting start part on a cutting path on an outer periphery of the ceramic, and a control part 40 that controls driving of the beam-emitting part 20 by adjusting the output, the shape, the mode, the emission area, and the cutting speed of the emitted beam.

The beam-emitting part 20 may include a beam generator 21 that generates a beam by adjusting the output, the shape, the mode, the emission area, and the cutting speed of the beam according to a control signal of the control part 40, a lens part 22 that focuses the beam generated by the beam generator 21 to emit the beam toward the UTG, and a driving part 23 that drives the lens part 22 to move the beam in a direction in which the ceramic is to be cut.

The beam-emitting part 21 may emit the beam in a substantially circular shape, an elliptical shape, or a polygonal shape such as a rectangular shape such that the emitted beam is symmetrical with respect to a cutting line.

Meanwhile, the beam-emitting part 21 emits a beam having an asymmetrical shape with respect to a tangent line of the cutting line when a curved part to be described below is cut or when distortion of the cutting position is corrected.

The damage generation part 30 functions to generate minute initial damage at a cutting start part S where a cutting operation is started on a cutting path W on an outer periphery of the UTG 11 to be cut.

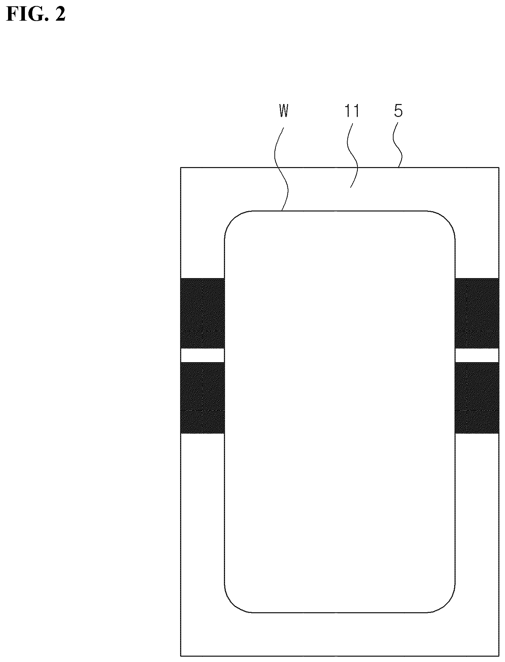

For example, FIG. 2 is a view for illustrating a process of cutting the UTG.

As illustrated in FIG. 2, when the UTG 11 having a substantially rectangular plate shape is cut into a desired size, the cutting path W is formed to sequentially move along downward, left, upward, and right directions while starting from the cutting start part S set as the outer periphery, for example, an upper right part of the UTG 11. In this case, each vertex portion of the cutting path W may be formed as a rounded curved surface to correspond to each vertex portion of a display applied to the electronic device.

The damage generation part 30 may be provided as a mechanical wheel according to a ceramic material to be cut or may use the beam generator 21 of the beam-emitting part 20.

For example, when the damage generation part 30 is provided as a mechanical wheel, minute initial damage, for example, a crack or groove having a dot shape may be generated in the cutting start part S.

Alternatively, when the beam generator 21 is used, the damage generation part 30 may generate minute initial damage by heating the cutting start portion S at a temperature equal to or lower than the melting point.

Meanwhile, an operation of generating the initial damage at the cutting start part S by using the damage generation part 30 may be omitted when the damage has been already generated on the ceramic 11 to be cut, that is, the outer periphery portion of the UTG.

The control part 40 controls to locally heat the ceramic 11 to equal to or lower than the melting point of the ceramic 11 with a beam, which has a beam mode and a beam shape set based on a material of the ceramic 11 to be cut, that is, a thickness of the UTG or the tempered depth of the tempered glass, by adjusting the cutting speed in proportion to the output of the beam. In addition, the control part 40 may adjust a region affected by heat and thermal stress so as to prevent a ceramic 11 from being cut in an arbitrary direction, and may control the ceramic 11 to be cut along a desired path by heating the ceramic 11 while generating the thermal stress to be equal to or greater than the maximum heat resistance strength of the ceramic 11.

The control part 40 may control to increase the emission area to which the beam is emitted in proportion to the thickness of the UTG or the tempered depth of the tempered glass.

For example, the control part 40 may control to heat the material to an area of 0.01 to 10000 times than thickness A of the UTG.

In addition, the control part 40 may control to selectively apply one or more beam modes from among a Gaussian mode using a general Gaussian distribution and a bilateral symmetry mode having an output distribution that is bilaterally symmetric with respect to the cutting line.

In addition, the control part 40 may cut the ceramic 11 by controlling driving of the beam-emitting part 20 to adjust the cutting speed in proportion to the output of the beam.

Meanwhile, when cutting a ceramic such as a tempered glass that is tempered, the control part 40 may control driving of the beam-emitting part 20 to cut the ceramic while heating the ceramic to a temperature equal to or lower than a temperature at which a tempering property of the ceramic is released.

Referring back to FIG. 1, the ceramic cutting apparatus 10 according to a preferred embodiment of the present invention may further include a measurement part 50 that measures a cutting position where cutting is currently performed by the emitted beam, and the cutting part 40 may control to compensate for a difference (Δx and Δy) between a cutting position P and the cutting line L by calculating in real time the difference between the cutting position P measured by the measurement part 50 and a predetermined cutting line L.

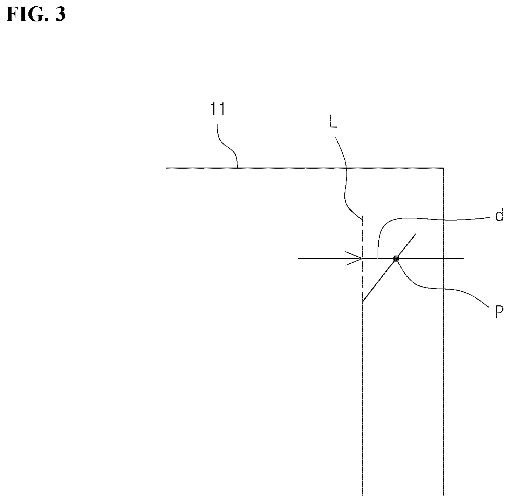

For example, FIG. 3 is a view for explaining a process of compensating for distortion of the cutting position.

When the cutting line L is close to the outer periphery of the ceramic 11 to be cut, relatively small amount of heat is dissipated in the outward direction of the cutting line L, and relatively large amount of heat is dissipated in the inward direction of the cutting line L. For this reason, a phenomenon in which the cutting line L is bent outwardly occurs.

Therefore, according to the invention, when a straight line having the cutting position P close to the outline of the ceramic 11 is cut, straightness may be secured by emitting the beam while correcting the cutting path corresponding to the amount of bending in the outward direction, or using a beam mode, which has an output distribution that is relatively weak in the outward direction of the cutting line L and an output distribution that is relatively strong in the inward direction of the cutting line L.

In addition, when a curved surface is cut as illustrated in FIG. 3, heat is dissipated relatively better through an outer perimeter portion of the light curved line at the tangent line of the curved cutting line, and heat is relatively less dissipated inward of the curved line.

Therefore, according to the invention, when the curved surface is cut, the cutting position is compensated by using a beam mode, which has an output that is relatively weak in a direction deviating from the cutting line in proportion to an amount of deviation from the cutting line, that is, to an outer perimeter portion of the beam and an output distribution that is relatively strong inward of the curved line, so that the ceramic may be cut with high quality.

As a result, according to the present invention, the cutting position where cutting is currently performed by the emitted beam is measured when the ceramic is cut, and distortion of the cutting position is compensated in real time by calculating the difference between the measured cutting position and the predetermined cutting line, so that it is possible to improve straightness of the cutting line and cutting performance.

Meanwhile, as illustrated in FIG. 1, the ceramic cutting apparatus 10 according to a preferred embodiment of the present invention may further include a coolant spray part 60 that sprays a coolant to the surface of the ceramic 11 making contact with the beam emitted by the beam-emitting part 20 when the thin-sheet ceramic 11 having a thickness of 3 mm or less is cut.

The coolant spray part 60 sprays the coolant to the surface of the ceramic 11 to which the beam is emitted, so that the ceramic may be cut by reducing thermal deformation of the surface of the ceramic 11.

That is, in case of the above thin-sheet ceramic 11, when the surface of the ceramic 11 is heated by the beam emitted by the beam-emitting part 20, the heated surface is instantaneously delaminated, and as time goes by, the melt ceramic 11 is fuse-bonded without being cut.

Therefore, according to the present embodiment, it is possible to reduce thermal deformation of the surface of the ceramic by additionally spraying the coolant on the surface of the ceramic 11 to which the beam is emitted when the thin-sheet ceramic 11 is cut and to precisely cut the thin-sheet ceramic along a desired path.

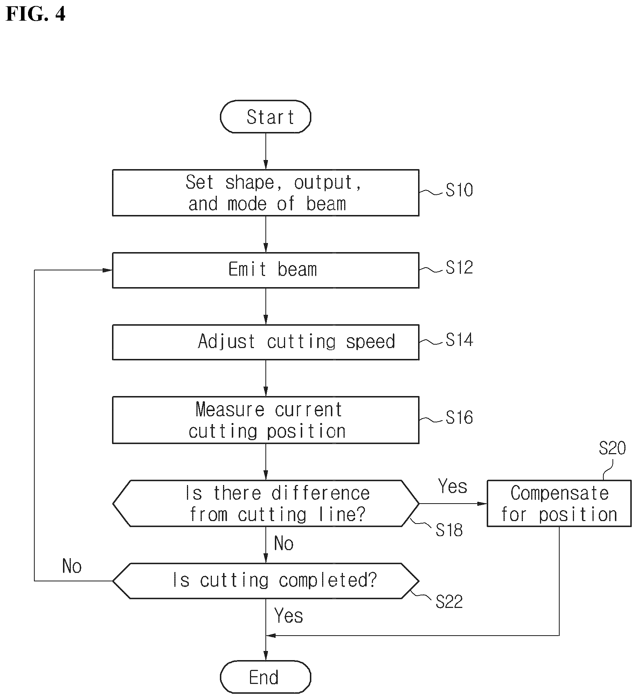

Next, a ceramic cutting method according to a preferred embodiment of the present invention will be described in detail with reference to FIG. 4.

FIG. 4 is a flowchart for explaining a method for cutting a ceramic in steps according to a preferred embodiment of the present invention.

In step S10 of FIG. 4, the control part 40 sets the output, the shape, the mode, and the emission area of the beam emitted by the beam-emitting part 20 according to the thickness of the ceramic 11 to be cut, that is, the UTG or the tempered depth of the tempered glass.

In step S12, the control part 40 controls driving of the damage generation part to generate minute initial damage at the cutting start part S where a cutting operation is started on the cutting path W on the outer periphery of the UTG 11 to be cut.

In this case, when damage has been generated on the ceramic 11 to be cut, that is, the outer periphery of the UTG, the control part 40 may omit the operation of generating initial damage at the cutting start part S by using the damage generation part 30.

In step S14, the control part 40 controls driving of the beam-emitting part 20 to emit the beam according to the set output, shape, and mode of the beam.

Accordingly, the beam generated by the beam-emitting part 20 is emitted to the UTG, and the driving part 23 of the beam-emitting part 20 drives the lens part 22 to move the beam along the cutting line L.

In this case, the control part 40 controls driving of the beam-emitting part 20 to adjust the cutting speed in proportion to the output of the beam emitted to the UTG (S16) .

In this case, when the UTG 11 is cut, the coolant spray part 60 is driven according to the control signal of the control part to additionally spray the coolant to the surface of the ceramic 11 to which the beam is emitted, so that thermal deformation of the surface of the UTG 11 may be reduced, thereby precisely cutting the surface of the UTG 11 along a desired path.

Meanwhile, when cutting a ceramic such as a tempered glass that is tempered, the control part 40 may control driving of the beam-emitting part 20 to cut the ceramic while heating the ceramic to a temperature equal to or lower than a temperature at which a tempering property of the ceramic is released.

During the cutting of the UTG as described above, the measurement part 50 measures the cutting position where cutting is currently performed (S18).

For example, a camera module provided in the measurement part 50 may photograph the cutting position P where cutting is currently performed, and the control part 40 may analyze the photographed image to calculate X and Y coordinates of the current cutting position.

Subsequently, the control part 40 compares the calculated current cutting position P with the cutting line L to check whether the difference (Δx and Δy) between the cutting position P and the cutting line exceeds a predetermined limit range.

As a result of the check in S18, when the difference (Δx and Δy) between the cutting position P and the cutting line L exceeds the above limit range due to cutting of the curved surface, the control part 40 controls to compensate for distortion of the cutting position by the generated difference (Δx and Δy) (S22).

For example, when a straight line having the cutting position P close to the outline is cut at the cutting position P, the control part 40 controls to secure straightness by emitting the beam while correcting the cutting path corresponding to the amount of bending in the outward direction, or using a beam mode, which has an output distribution that is relatively weak in the outward direction of the cutting line L and an output distribution that is relatively strong in the inward direction of the cutting line L.

Alternatively, when the curved surface is cut, the control part 40 controls to cut the ceramic with high quality by compensating for distortion of the cutting position while using a beam mode, which has an output that is relatively weak in a direction deviating from the cutting line in proportion to the amount of deviation from the cutting line, that is, to the outer perimeter portion of the beam and an output distribution that is relatively strong inward of the curved line.

In step S24, the control part 40 checks completion of the cutting operation, and steps S12 to S24 are repeatedly performed until the cutting operation is completed.

Meanwhile, as the result of the check in S24, when the cutting operation has been completed, the control part 40 stops driving of each apparatus provided in the ceramic cutting apparatus 10 and ends the process.

Through the process as described above, according to the present invention, it is possible to cut the ceramic, that is, a tempered glass that is tempered at a depth of level of 1 µm or greater or a thin-sheet glass having a temperature of 3 mm or less without cracks or damage by emitting the beam to the ceramic, that is, the tempered glass or the thin glass at a temperature equal to or lower than the melting point while optimizing the output, the shape, the emission area, and the cutting speed of the beam emitted to the ceramic, that is, the tempered glass or the thin glass.

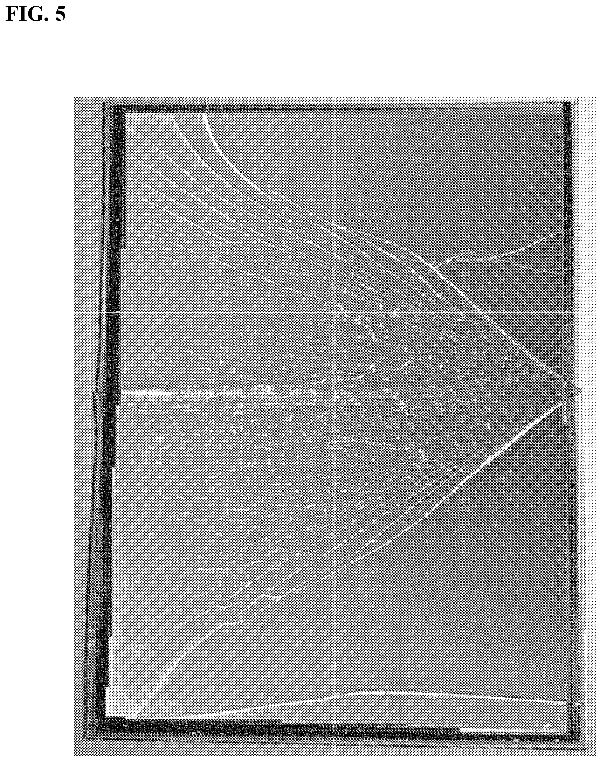

Next, a method for cutting ceramics having various materials and thicknesses will be described with reference to FIGS. 5 to 9.

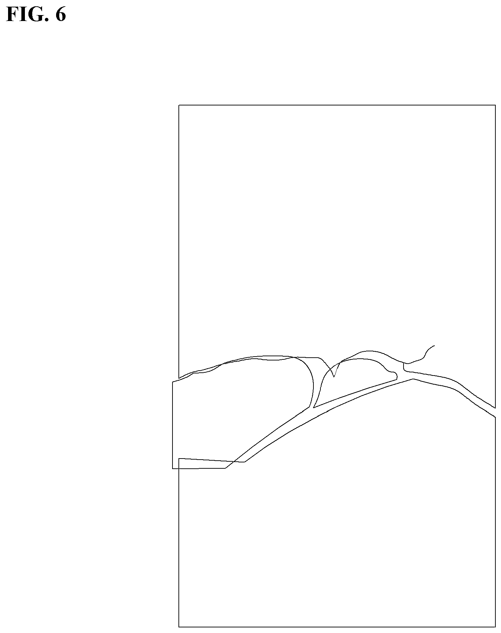

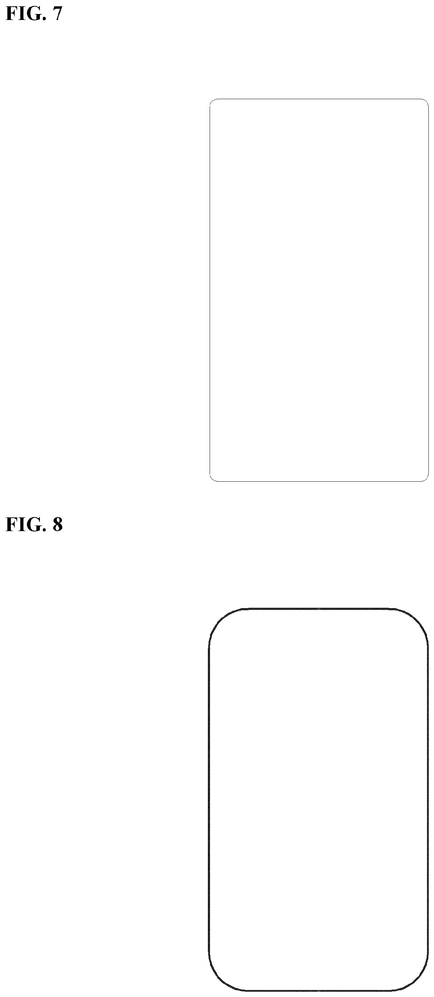

First, FIG. 5 and 6 are views for illustrating a tempered glass and a UTG, which have tempered surfaces that are damaged in a cutting process, respectively. In addition, FIGS. 7 to 9 are views illustrating ceramics cut by the ceramic cutting method according to Examples 1 to 3.

As illustrated in FIGS. 5 and 6, when the output, the shape, the mode, the emission area, and the cutting speed of the beam are not optimized during cutting of the tempered glass and the UTG, which have tempered surfaces, respectively, by emitting the beam, the tempered glass and the UTG may be easily broken.

### [Example 1]

In Example 1, a borosilicate glass having a thickness of about 0.05 mm was cut as illustrated in FIG. 7.

The control part 40 emits a laser beam, which has an infrared red wavelength of about 750 nm to 1000 µm, to a material to be cut at an output of about 400 W, and controls to use a beam mode having an output of the outer periphery part, which is higher than an output of a central part, rather than a general Gaussian beam. In this case, the cutting speed is about 400 mm/s, the beam shape is bilaterally symmetrical with respect to the cutting line, and the emission area of the beam may be set to about 3 mm².

### [Example 2]

In Example 2, a soda lime glass having a thickness of about 2.8 mm was cut as illustrated in FIG. 8.

The control part 40 emits a laser beam having an infrared red wavelength to a material to be cut at an output of about 700 W, and controls to use a beam mode having an output of the outer periphery part, which is higher than an output of a central part, rather than a general Gaussian beam. In this case, the cutting speed is about 500 mm/s, the beam shape is bilaterally symmetrical with respect to the cutting line, and the emission area of the beam may be set to about 10 mm².

### [Example 3]

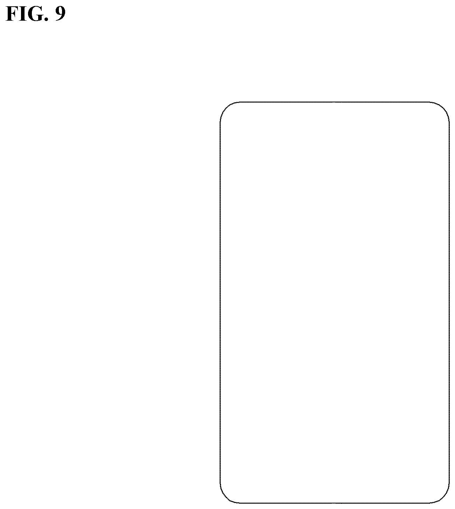

In Example 3, a chemically tempered glass that is chemically tempered, also known as a gorilla glass, having a surface of about 0.5 mm thick was cut as illustrated in FIG. 9.

In this case, a chemical depth of layer (DOL) of the chemically tempered glass is about 50 µm.

When the chemically tempered glass is cut with a mechanical wheel or a laser beam according to the related art, since the chemically tempered glass has a strong tempering property, it is immediately broken into small pieces.

Therefore, the control part 40 emits a laser beam, which has an ultraviolet wavelength of about 1 nm to 380 nm, to a material to be cut at an output of about 50 W, and controls to use a beam mode having an output of the outer periphery part, which is higher than an output of a central part, rather than a general Gaussian beam. In this case, the cutting speed is about 200 mm/s, the beam shape is bilaterally symmetrical with respect to the cutting line, and the emission area of the beam may be set to about 10 mm².

### [Industrial Applicability]

The present invention is applied to a technology of a method and an apparatus for cutting a ceramic, which cut the ceramic, that is, a tempered glass that is tempered at a depth of level of 1 µm or greater or a thin-sheet glass having a temperature of 3 mm or less without cracks or damage by emitting the beam to the ceramic, that is, the tempered glass or the thin glass at a temperature equal to or lower than the melting point while optimizing the output, the shape, the emission area, and the cutting speed of the beam emitted to the ceramic, that is, the tempered glass or the thin glass.

## Claims

1. An apparatus (10) for cutting a ceramic, which cuts a ceramic (11) having a surface that is tempered at a depth of layer of 1 µm or greater or a thin-sheet ceramic having a thickness of 3 mm or less without cracks or damage, the apparatus comprising:
a beam-emitting part (20) configured to emit a beam of a wavelength that is absorbed by the ceramic (11);
a damage generation part (30) configured to generate minute damage at a cutting start part on a cutting path on an outer periphery of the ceramic (11); and
a control part (40) configured to adjust an output, a shape, a mode, an emission area, and a cutting speed of the beam emitted by the beam-emitting part (20) and control driving of the beam-emitting part (20),
wherein the beam is formed in a symmetrical shape with respect to a cutting line, and formed in an asymmetrical shape with respect to a tangent line of the cutting line when a curved part is cut or distortion of a cutting position is corrected,
the control part (40) adjusts the cutting speed in proportion to the output of the beam, and
the control part (40) controls to adjust the emission area of the beam in proportion to a thickness of the ceramic (11),
so that the ceramic (11) is locally heated to equal to or lower than a melting point of the ceramic (11) with a beam, which has a beam mode and a beam shape set based on a ceramic material and the thickness or a tempered depth of the ceramic (11), by adjusting the cutting speed in proportion to the output of the beam, regions affected by heat and thermal stress are adjusted to prevent the ceramic (11) from being cut in an arbitrary direction, and thermal stress equal to or greater than a maximum heat resistance strength of the ceramic (11) is generated to cut the ceramic (11) along a desired path,
wherein when the curved surface is cut, the cutting position is compensated by using a beam mode, which has an output that is relatively weak in a direction deviating from the cutting line in proportion to an amount of deviation from the cutting line, that is, to an outer perimeter portion of the beam and an output distribution that is relatively strong inward of the curved line.

2. The apparatus of claim 1, wherein the damage generation part (30) is omitted when damage has been already generated on an outer periphery portion of the ceramic to be cut.

3. The apparatus of claim 1, wherein when cutting the tempered ceramic (11), the control part (40) controls the driving of the beam-emitting part (20) to cut the ceramic (11) while heating the ceramic (11) at a temperature equal to or lower than a temperature at which a tempering property of the ceramic (11) is released.

4. The apparatus of claim 1, further comprising a coolant spray part (60) configured to spray a coolant such that when the thin-sheet ceramic (11) having a thickness of 3 mm or less is cut, the thin-sheet ceramic (11) is cut by additionally spraying the coolant to a ceramic surface making contact with beams emitted by the beam-emitting part (20) such that thermal deformation of the ceramic surface is reduced.

5. The apparatus of claim 1, further comprising a measurement part (50) configured to measure a cutting position where cutting is currently performed by the emitted beam,
wherein when the cutting position measured by the measurement part (50) deviates from the cutting line of the ceramic (11), the control part (40) controls to secure straightness by using said beam mode, or by correcting an emission position of the beam.

6. A method for cutting a ceramic, which cuts a ceramic (11) having a surface that is tempered at a depth of layer of 1 µm or greater or a thin-sheet ceramic having a thickness of 3 mm or less, the method comprising:
(a) emitting, by a beam-emitting part (20), a beam of a wavelength that is absorbed by the ceramic (11);
(b) generating, by a damage generation part (30), minute damage at a cutting start part on a cutting path on an outer periphery of the ceramic (11); and
(c) controlling, by a control part (40), driving of the beam-emitting part by adjusting an output, a shape, a mode, an emission area, and a cutting speed of the beam emitted by the beam-emitting part (20),
wherein the beam is formed in a symmetrical shape with respect to a cutting line, and formed in an asymmetrical shape with respect to a tangent line of the cutting line when a curved part is cut or distortion of a cutting position is corrected,
the control part (40) adjusts the cutting speed in proportion to the output of the beam, and
the control part (40) performs control to adjust the beam emission area in proportion to a thickness of the ceramic (11),
so that the ceramic (11) is locally heated to equal to or lower than a melting point of the ceramic (11) with a beam, which has a beam mode and a beam shape set based on a ceramic material and the thickness or a tempered depth of the ceramic (11), by adjusting the cutting speed in proportion to the output of the beam, and areas affected by heat and thermal stress are controlled to prevent the ceramic (11) from being cut in an arbitrary direction, and thermal stress equal to or greater than a maximum heat resistance strength of the ceramic (11) is generated to cut the ceramic (11) along a desired path,
wherein when the curved surface is cut, the cutting position is compensated by using a beam mode, which has an output that is relatively weak in a direction deviating from the cutting line in proportion to an amount of deviation from the cutting line, that is, to an outer perimeter portion of the beam and an output distribution that is relatively strong inward of the curved line.

7. The method of claim 6, wherein step (b) is omitted when damage has been already generated on an outer periphery portion of the ceramic (11) to be cut.

8. The method of claim 6, wherein in step (c), when cutting the tempered ceramic (11), the control part (40) controls the driving of the beam-emitting part to cut the ceramic (11) while heating the ceramic at a temperature equal to or lower than a temperature at which a tempering property of the ceramic (11) is released.

9. The method of claim 6, further comprising: (d) spraying a coolant using a coolant spray part (60) such that when the thin-sheet ceramic (11) having a thickness of 3 mm or less is cut, the thin-sheet ceramic (11) is cut by additionally spraying the coolant to a ceramic surface making contact with the beam emitted by the beam-emitting part (20) such that thermal deformation of the ceramic surface is reduced.

10. The method of claim 6, further comprising:
(e) measuring, by a measurement part (50), a cutting position where cutting is currently performed by the beam emitted to the ceramic; and
(f) controlling, by the control part (40), to secure straightness by using said beam mode, or by correcting an emission position of the beam, when the measured cutting position deviates from the cutting line of the ceramic (11).

## Patentansprüche

1. Vorrichtung (10) zum Schneiden von Keramik, die eine Keramik (11) mit einer Oberfläche, die in einer Schichttiefe von 1 µm oder mehr gehärtet ist, oder eine dünne Keramikplatte mit einer Dicke von 3 mm oder weniger ohne Risse oder Beschädigungen schneidet, wobei die Vorrichtung umfasst:
einen Strahl emittierenden Teil (20), der so konfiguriert ist, dass er einen Strahl mit einer Wellenlänge emittiert, die von der Keramik (11) absorbiert wird;
einen Schadenserzeugungsteil (30), der so konfiguriert ist, dass er einen winzigen Schaden an einem Schneidestartpunkt auf einem Schneidweg an einem Außenumfang der Keramik (11) erzeugt; und
einen Steuerteil (40), der so konfiguriert ist, dass er die Leistung, die Form, den Modus, den Emissionsbereich und die Schnittgeschwindigkeit des vom Strahlungsabschnitt (20) emittierten Strahls einstellt und den Antrieb des Strahlungsabschnitts (20) steuert,
wobei der Strahl in einer symmetrischen Form in Bezug auf eine Schnittlinie ausgebildet ist und in einer asymmetrischen Form in Bezug auf eine Tangente der Schnittlinie ausgebildet wird, wenn ein gekrümmter Teil geschnitten wird oder eine Verzerrung einer Schnittposition korrigiert wird,
wobei der Steuerteil (40) die Schnittgeschwindigkeit proportional zur Leistung des Strahls einstellt und
der Steuerteil (40) so steuert, dass der Emissionsbereich des Strahls proportional zur Dicke der Keramik (11) eingestellt wird,
so dass die Keramik (11) lokal auf eine Temperatur erwärmt wird, die gleich oder niedriger als der Schmelzpunkt der Keramik (11) ist, wobei der Strahl einen Strahlmodus und eine Strahlform aufweist, die auf der Grundlage des Keramikmaterials und der Dicke oder der Temperierungstiefe der Keramik (11) eingestellt werden, indem die Schnittgeschwindigkeit proportional zur Leistung des Strahls angepasst wird, werden die von Hitze und thermischer Belastung betroffenen Bereiche angepasst, um zu verhindern, dass die Keramik (11) in eine beliebige Richtung geschnitten wird, und es wird eine thermische Belastung erzeugt, die gleich oder größer als die maximale Wärmebeständigkeit der Keramik (11) ist, um die Keramik (11) entlang eines gewünschten Pfades zu schneiden,
wobei beim Schneiden der gekrümmten Oberfläche die Schneidposition unter Verwendung eines Strahlmodus kompensiert wird, der eine Leistung aufweist, die in einer von der Schnittlinie abweichenden Richtung proportional zu einem Betrag der Abweichung von der Schnittlinie, d. h. zu einem Außenumfangsabschnitt des Strahls, relativ schwach ist, und eine Leistungsverteilung aufweist, die innerhalb der gekrümmten Linie relativ stark ist.

2. Vorrichtung nach Anspruch 1, wobei der Schadenserzeugungsteil (30) weggelassen wird, wenn bereits ein Schaden an einem Außenumfangsabschnitt der zu schneidenden Keramik erzeugt wurde.

3. Vorrichtung nach Anspruch 1, wobei beim Schneiden der gehärteten Keramik (11) der Steuerteil (40) den Antrieb des Strahlabgabeteils (20) so steuert, dass die Keramik (11) geschnitten wird, während die Keramik (11) auf eine Temperatur erhitzt wird, die gleich oder niedriger ist als eine Temperatur, bei der die Härtungseigenschaft der Keramik (11) freigesetzt wird.

4. Vorrichtung nach Anspruch 1, die ferner einen Kühlmittel-Sprühteil (60) umfasst, der so konfiguriert ist, dass er ein Kühlmittel so versprüht, dass beim Schneiden der dünnen Keramikplatte (11) mit einer Dicke von 3 mm oder weniger die dünne Keramikplatte (11) durch zusätzliches Sprühen des Kühlmittels auf eine Keramikoberfläche, die mit von dem Strahlungsabschnitt (20) emittierten Strahlen in Kontakt steht, geschnitten wird, so dass eine thermische Verformung der Keramikoberfläche verringert wird.

5. Vorrichtung nach Anspruch 1, die ferner einen Messabschnitt (50) umfasst, der so konfiguriert ist, dass er eine Schneidposition misst, an der derzeit durch den emittierten Strahl geschnitten wird,
wobei, wenn die durch den Messabschnitt (50) gemessene Schneidposition von der Schnittlinie der Keramik (11) abweicht, der Steuerabschnitt (40) so steuert, dass die Geradheit durch Verwendung des Strahlmodus oder durch Korrigieren einer Emissionsposition des Strahls sichergestellt wird.

6. Verfahren zum Schneiden einer Keramik, bei dem eine Keramik (11) mit einer Oberfläche, die in einer Schichttiefe von 1 µm oder mehr gehärtet ist, oder eine dünne Keramikplatte mit einer Dicke von 3 mm oder weniger geschnitten wird, wobei das Verfahren umfasst:
(a) Emittieren eines Strahls mit einer Wellenlänge, die von der Keramik (11) absorbiert wird, durch einen Strahl-Emittierenden-Teil (20);
(b) Erzeugen einer winzigen Beschädigung an einem Schneidstartpunkt auf einem Schneidweg an einem Außenumfang der Keramik (11) durch einen Beschädigungsteil (30); und
(c) Steuern des Antriebs des Strahl emittierenden Teils durch einen Steuerteil (40) durch Einstellen einer Leistung, einer Form, eines Modus, eines Emissionsbereichs und einer Schnittgeschwindigkeit des von dem Strahl emittierenden Teil (20) emittierten Strahls,
wobei der Strahl in Bezug auf eine Schnittlinie symmetrisch und in Bezug auf eine Tangente der Schnittlinie asymmetrisch ausgebildet ist, wenn ein gekrümmter Teil geschnitten oder eine Verzerrung einer Schnittposition korrigiert wird,
der Steuerteil (40) die Schnittgeschwindigkeit proportional zur Leistung des Strahls einstellt und
der Steuerteil (40) eine Steuerung durchführt, um den Strahlungsbereich proportional zur Dicke der Keramik (11),
so dass die Keramik (11) lokal auf eine Temperatur erwärmt wird, die gleich oder niedriger als der Schmelzpunkt der Keramik (11) ist, wobei der Strahl einen Strahlmodus und eine Strahlform aufweist, die auf der Grundlage eines Keramikmaterials und der Dicke oder einer Temperierungstiefe der Keramik (11) eingestellt werden, indem die Schnittgeschwindigkeit proportional zur Leistung des Strahls eingestellt wird, und Bereiche, die von Hitze und thermischer Belastung betroffen sind, werden gesteuert, um zu verhindern, dass die Keramik (11) in eine beliebige Richtung geschnitten wird, und es wird eine thermische Belastung erzeugt, die gleich oder größer als die maximale Wärmebeständigkeit der Keramik (11) ist, um die Keramik (11) entlang eines gewünschten Pfades zu schneiden,
wobei beim Schneiden der gekrümmten Oberfläche die Schneidposition unter Verwendung eines Strahlmodus kompensiert wird, der eine Leistung aufweist, die in einer von der Schnittlinie abweichenden Richtung proportional zu einem Betrag der Abweichung von der Schnittlinie, d. h. zu einem Außenumfangsabschnitt des Strahls, relativ schwach ist, und eine Leistungsverteilung, die innerhalb der gekrümmten Linie relativ stark ist.

7. Verfahren nach Anspruch 6, wobei Schritt (b) weggelassen wird, wenn bereits eine Beschädigung an einem Außenumfangsabschnitt der zu schneidenden Keramik (11) entstanden ist.

8. Verfahren nach Anspruch 6, wobei in Schritt (c) beim Schneiden der gehärteten Keramik (11) die Steuereinheit (40) den Antrieb der Strahlabgabeeinheit so steuert, dass die Keramik (11) geschnitten wird, während die Keramik auf eine Temperatur erhitzt wird, die gleich oder niedriger als die Temperatur ist, bei der die Härtungseigenschaft der Keramik (11) freigesetzt wird.

9. Verfahren nach Anspruch 6, das ferner umfasst: (d) das Aufsprühen eines Kühlmittels unter Verwendung eines Kühlmittel-Sprühteils (60), so dass beim Schneiden der dünnen Keramikplatte (11) mit einer Dicke von 3 mm oder weniger die dünne Keramikplatte (11) durch zusätzliches Aufsprühen des Kühlmittels auf eine Keramikoberfläche, die mit dem vom Strahlungselement (20) emittierten Strahl in Kontakt steht, geschnitten wird, so dass die thermische Verformung der Keramikoberfläche verringert wird.

10. Verfahren nach Anspruch 6, das ferner umfasst:
(e) Messen einer Schneidposition, an der derzeit das Schneiden durch den auf die Keramik emittierten Strahl durchgeführt wird, durch einen Messabschnitt (50); und
(f) Steuern durch den Steuerabschnitt (40), um die Geradheit unter Verwendung des Strahlmodus oder durch Korrigieren einer Emissionsposition des Strahls sicherzustellen, wenn die gemessene Schneidposition von der Schnittlinie der Keramik (11) abweicht.

## Revendications

1. Un appareil (10) pour couper une céramique, qui coupe une céramique (11) ayant une surface trempée à une profondeur de couche de 1 µm ou plus ou une céramique en feuille mince ayant une épaisseur de 3 mm ou moins sans fissures ni dommages, l'appareil comprenant :
une partie d'émission de faisceau (20) configurée pour émettre un faisceau d'une longueur d'onde qui est absorbée par la céramique (11) ;
une partie de génération de dommage (30) configurée pour générer un dommage minime au niveau d'une partie de début de coupe sur un chemin de coupe sur une périphérie extérieure de la céramique (11) ; et
une partie de commande (40) configurée pour ajuster une puissance, une forme, un mode, une zone d'émission et une vitesse de coupe du faisceau émis par la partie d'émission de faisceau (20) et commander l'entraînement de la partie d'émission de faisceau (20),
dans lequel le faisceau est formé selon une forme symétrique par rapport à une ligne de coupe, et formé selon une forme asymétrique par rapport à une ligne tangente à la ligne de coupe lorsqu'une partie courbe est coupée ou qu'une distorsion d'une position de coupe est corrigée,
la partie de commande (40) ajuste la vitesse de coupe en proportion de la puissance du faisceau, et
la partie de commande (40) commande pour ajuster la zone d'émission du faisceau en proportion d'une épaisseur de la céramique (11),
de sorte que la céramique (11) est chauffée localement à une température égale ou inférieure au point de fusion de la céramique (11) avec un faisceau qui a un mode de faisceau et une forme de faisceau définis en fonction d'un matériau céramique et de l'épaisseur ou de la profondeur de trempe de la céramique (11), en ajustant la vitesse de coupe en proportion de la puissance du faisceau, les régions affectées par la chaleur et la contrainte thermique sont ajustées pour empêcher la céramique (11) d'être coupée dans une direction arbitraire, et une contrainte thermique égale ou supérieure à la résistance maximale à la chaleur de la céramique (11) est générée pour couper la céramique (11) le long d'un chemin souhaité,
dans lequel, lorsque la surface courbe est coupée, la position de coupe est compensée en utilisant un mode de faisceau qui a une puissance relativement faible dans une direction s'écartant de la ligne de coupe en proportion d'un montant d'écart par rapport à la ligne de coupe, c'est-à-dire vers une partie périphérique extérieure du faisceau, et une distribution de puissance relativement forte vers l'intérieur de la ligne courbe.

2. L'appareil selon la revendication 1, dans lequel la partie de génération de dommage (30) est omise lorsqu'un dommage a déjà été généré sur une partie périphérique extérieure de la céramique à couper.

3. L'appareil selon la revendication 1, dans lequel, lors de la coupe de la céramique trempée (11), la partie de commande (40) commande l'entraînement de la partie d'émission de faisceau (20) pour couper la céramique (11) tout en chauffant la céramique (11) à une température égale ou inférieure à une température à laquelle une propriété de trempe de la céramique (11) est libérée.

4. L'appareil selon la revendication 1, comprenant en outre une partie de pulvérisation de liquide de refroidissement (60) configurée pour pulvériser un liquide de refroidissement de telle sorte que, lorsque la céramique en feuille mince (11) ayant une épaisseur de 3 mm ou moins est coupée, la céramique en feuille mince (11) est coupée en pulvérisant en plus le liquide de refroidissement sur une surface céramique en contact avec des faisceaux émis par la partie d'émission de faisceau (20) de manière à réduire la déformation thermique de la surface céramique.

5. L'appareil selon la revendication 1, comprenant en outre une partie de mesure (50) configurée pour mesurer une position de coupe où la coupe est actuellement effectuée par le faisceau émis,
dans lequel, lorsque la position de coupe mesurée par la partie de mesure (50) s'écarte de la ligne de coupe de la céramique (11), la partie de commande (40) commande pour assurer la rectitude en utilisant ledit mode de faisceau, ou en corrigeant une position d'émission du faisceau.

6. Un procédé pour couper une céramique, qui coupe une céramique (11) ayant une surface trempée à une profondeur de couche de 1 µm ou plus ou une céramique en feuille mince ayant une épaisseur de 3 mm ou moins, le procédé consistant à :
(a) émettre, par une partie d'émission de faisceau (20), un faisceau d'une longueur d'onde qui est absorbée par la céramique (11) ;
(b) générer, par une partie de génération de dommage (30), un dommage minime au niveau d'une partie de début de coupe sur un chemin de coupe sur une périphérie extérieure de la céramique (11) ; et
(c) commander, par une partie de commande (40), l'entraînement de la partie d'émission de faisceau en ajustant une puissance, une forme, un mode, une zone d'émission et une vitesse de coupe du faisceau émis par la partie d'émission de faisceau (20),
dans lequel le faisceau est formé selon une forme symétrique par rapport à une ligne de coupe, et formé selon une forme asymétrique par rapport à une ligne tangente à la ligne de coupe lorsqu'une partie courbe est coupée ou qu'une distorsion d'une position de coupe est corrigée,
la partie de commande (40) ajuste la vitesse de coupe en proportion de la puissance du faisceau, et
la partie de commande (40) commande pour ajuster la zone d'émission du faisceau en proportion d'une épaisseur de la céramique (11),
de sorte que la céramique (11) est chauffée localement à une température égale ou inférieure au point de fusion de la céramique (11) avec un faisceau qui a un mode de faisceau et une forme de faisceau définis en fonction d'un matériau céramique et de l'épaisseur ou de la profondeur de trempe de la céramique (11), en ajustant la vitesse de coupe en proportion de la puissance du faisceau, les zones affectées par la chaleur et la contrainte thermique sont ajustées pour empêcher la céramique (11) d'être coupée dans une direction arbitraire, et une contrainte thermique égale ou supérieure à la résistance maximale à la chaleur de la céramique (11) est générée pour couper la céramique (11) le long d'un chemin souhaité,
dans lequel, lorsque la surface courbe est coupée, la position de coupe est compensée en utilisant un mode de faisceau qui a une puissance relativement faible dans une direction s'écartant de la ligne de coupe en proportion d'un montant d'écart par rapport à la ligne de coupe, c'est-à-dire vers une partie périphérique extérieure du faisceau, et une distribution de puissance relativement forte vers l'intérieur de la ligne courbe.

7. Le procédé selon la revendication 6, dans lequel l'étape (b) est omise lorsqu'un dommage a déjà été généré sur une partie périphérique extérieure de la céramique (11) à couper.

8. Le procédé selon la revendication 6, dans lequel, à l'étape (c), lors de la coupe de la céramique trempée (11), la partie de commande (40) commande l'entraînement de la partie d'émission de faisceau pour couper la céramique (11) tout en chauffant la céramique à une température égale ou inférieure à une température à laquelle une propriété de trempe de la céramique (11) est libérée.

9. Le procédé selon la revendication 6, consistant en outre à :
(d) pulvériser un liquide de refroidissement à l'aide d'une partie de pulvérisation de liquide de refroidissement (60) de telle sorte que, lorsque la céramique en feuille mince (11) ayant une épaisseur de 3 mm ou moins est coupée, la céramique en feuille mince (11) est coupée en pulvérisant en plus le liquide de refroidissement sur une surface céramique en contact avec le faisceau émis par la partie d'émission de faisceau (20) de manière à réduire la déformation thermique de la surface céramique.

10. Le procédé selon la revendication 6, consistant en outre à :
(e) mesurer, par une partie de mesure (50), une position de coupe où la coupe est actuellement effectuée par le faisceau émis vers la céramique ; et
(f) commander, par la partie de commande (40), pour assurer la rectitude en utilisant ledit mode de faisceau, ou en corrigeant une position d'émission du faisceau, lorsque la position de coupe mesurée s'écarte de la ligne de coupe de la céramique (11).
